# EUROPEAN PATENT APPLICATION

(11) **EP 1 550 545 A2**
(43) Date of publication of application: **06.07.2005**
(21) Application number: 04106071.6
(22) Date of filing: 25.11.2004
(51) Int. Cl.: B29C 49/78, B29C 49/04, B29C 47/92

(54) **Method and apparatus for extrusion blow moulding articles**

(30) Priority: 11.12.2003 IT BO20030743
(71) Applicant: TECHNE TECHNIPACK ENGINEERING ITALIA S.p.A., 40068 San Lazzaro di Savena (Bologna) (IT)
(72) Inventor: Minghetti, Moreno, 40068, San Lazzaro di Savena (IT); Castellari, Fabrizio, 40068, San Lazzaro di Savena (IT)
(74) Representative: Porsia, Dino, Dr.

(57) **Abstract**

In order to reduce the cycle times and improve the production quality of the machines designed to extrude parisons and subsequently obtain from them thermoplastic articles using the blowing technique, the invention envisages that, during the step for production of the parison (2), the latter is retained not only at the top by the production die (1) but also at the bottom end by dynamic means (5) which accompany it during the descending movement so that the parison does not swing owing to the effect of the air currents produced for example during the movement of the moulds (3) and the counter-moulds (103) and/or other operative parts of the machine which are thus able to move more quickly than occurs in the prior art, with the advantages arising from the reduction in the idle time of the machines in question.

## Description

A weak point of the current technology of extrusion blow-moulding articles using thermoplastic material essentially consists in the fact that the tubes of plastic material, or so-called "parisons", which leave the extrusion or co-extrusion die, freely descend in the empty space without any support except for attachment to the die which forms them and from which they are hung. At present, about 30% of the time during a normal working cycle of an extrusion blow-moulding machine is required for the deceleration which must be performed during the absolute and relative movement of the moulds, in order to prevent air currents which result in undesirable movement of the parisons suspended from the forming dies. Moreover the parisons have the natural tendency to be charged with static electricity during the extrusion forming step, so that, in order to avoid dangerous electric arcs during the movement of the moulds towards the parisons, it is required to discharge this electricity from them. At present this task is performed by de-ionizing bars which are situated downstream of the die, but which solve the problem only partly in that they act on the parison by means of induction and not with actual physical contact. The invention therefore intends to recover a large part of the abovementioned idle time during the working cycle of the blow-moulding machine, intends to solve the abovementioned problem of drainage of the static electricity from the parisons and also intends to improve the quality of the products obtained during the extrusion blow-moulding process, with the following proposed solution. In phase synchronism with the parison extrusion process, the bottom end of the parisons is gripped by gripping means which descend at a predefined speed, so as to accompany the said parisons during their downward travel movement such that, during the formation step, the parisons are supported at both their opposite ends and are not free to swing in the empty space, as in the prior art. These means for dynamically supporting the bottom end of the parisons are able to move at the same speed at which the parison would descend also under the effect of gravity or may move with a higher or lower speed so as to induce in the parisons a tensioning action or longitudinal compression, respectively, with consequent modification of the thickness, which could improve the quality of the products obtained from them. By means of these means for dynamically supporting the bottom end of the parison, it will be possible to perform effective drainage of the static electricity from the said parisons which will thus come into contact with the blow-moulding moulds in an electrically discharged condition. When the parisons are enclosed between the moulds, the said means gripping the bottom ends of the parisons are situated underneath and outside the said moulds and in phase synchronism will abandon the parisons so as to allow the moulds to be transferred into the blowing station, while in phase synchronism these gripping means will move upwards in order to repeat the operating cycle which they are required to perform on new parisons being extruded.

When it is required to control simultaneously several parisons which are arranged alongside each other, the thicknesses and the variations in thickness induced in the parisons by the associated regulating systems must be strictly the same. In order to solve this problem, the invention envisages that the various plugs for adjusting the thickness of the parisons inside the extrusion dies are fixed to a single beam which is connected at its ends to a pair of linear actuators with the same characteristics, for example of the electromechanical type, with brushless motors or the like or of the hydrostatic type, with electrically modulated servo-valves, where an actuator is operated in accordance with a predetermined program, with the function of master, while the other servo-control device is operated with the function of sub-master so as to move in perfect and absolute synchronism with the first device, so as to ensure the desired synchronisation of the axial adjusting movements of the plugs in the various extrusion dies.

Further characteristic features of the invention and the advantages arising therefrom will emerge more clearly from the following description of some preferred embodiments thereof illustrated purely by way of a non-limiting example in the figures of the accompanying plates of drawings in which:
- Figs. 1, 2, 3 and 4 are schematic side views, with parts sectioned, of the moulds of the blow-moulding machine and of a die for extruding a parison, with the means in question for dynamic control of the said parison;
- Figs. 5 and 6 show schematically a top plan view of the means for gripping the bottom end of the parison, in the rest condition and operating condition, respectively;
- Figs. 7 and 8 are, respectively, a top plan view and side elevation view illustrating application of the means according to the preceding figures to moulds having a large number of forming seats situated alongside each other;
- Fig. 9 is a top plan view illustrating application of the means for dynamically controlling the parison to moulds having a small number of forming seats situated alongside each other, for example in a twin-mould machine as described in Italian Patent No. 1,260,295.

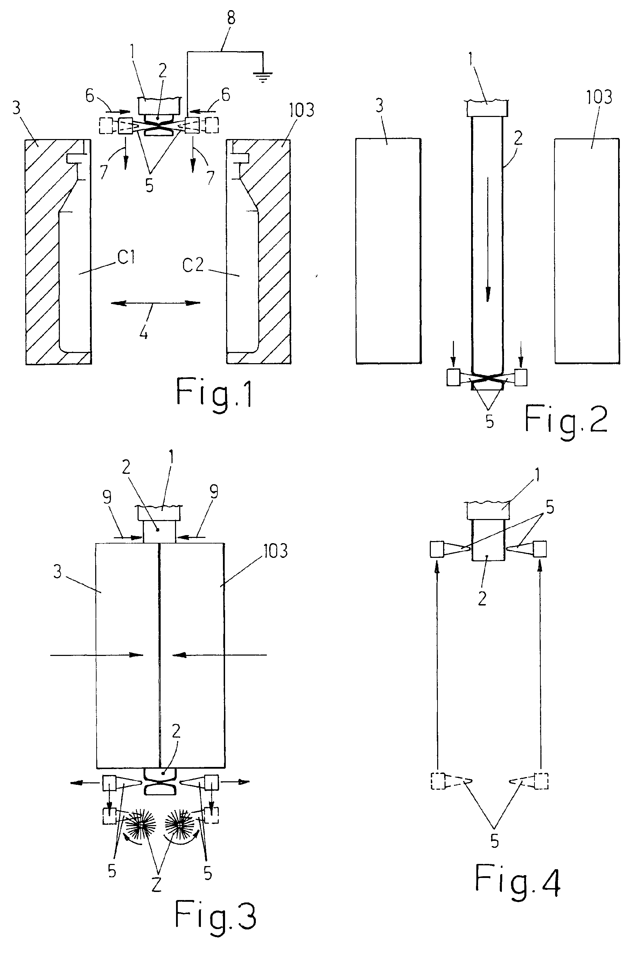

In Figure 1, 1 denotes the discharge mouth of the die which is associated with an extruder and from which the vertical and descending plastic tube 2 - the so-called "parison" - emerges, a section of which tube is cyclically gripped between a mould 3 and a counter-mould 103 which are movable horizontally, as indicated by the arrows 4 and separated from the continuous parison above, with a cutting operation performed by special means (see below) and then, by means of a relative movement of the mould/counter-mould assembly and the die 1, which ensures that the latter is able to function continuously, the said mould/counter-mould assembly is moved away from the die 1 with at least one horizontal displacement component and is transferred into a station where a needle is inserted into one end of the bubble of plastic trapped therein, usually the top end, said needle introducing into the said bubble gas under pressure and causing the bubble to cling to the matching cavities C1, C2 of the mould and the counter-mould, so as to form a pre-chosen hollow article, for example a container. Subsequently, while the container is retained by means of its neck inside the blowing station, the mould and counter-mould are opened in order to release the said container from the mould and return open underneath the die 1, for repetition of a new working cycle.

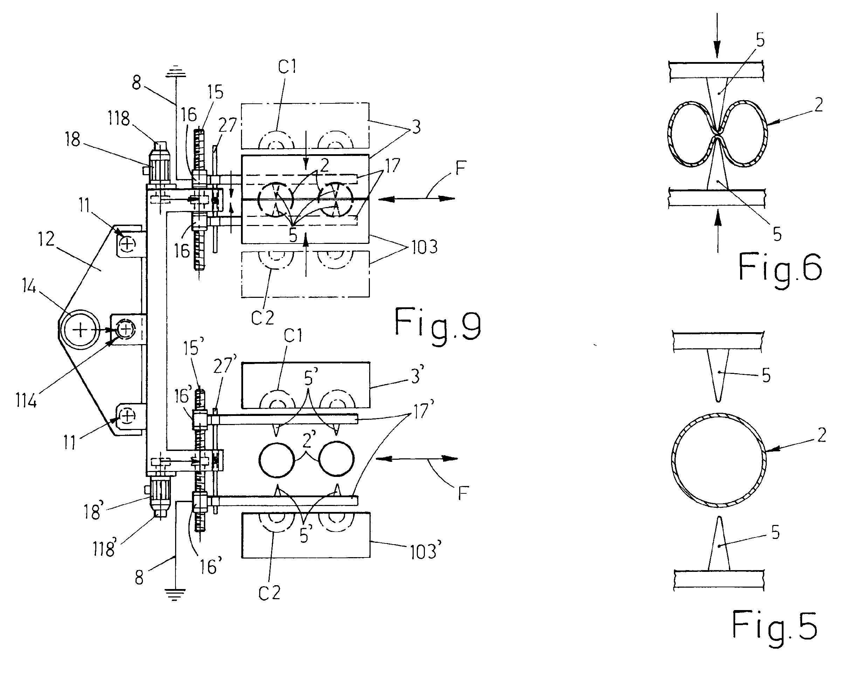

According to the invention, the bottom end of the parison 2 which leaves the die is gripped by any suitable means which, in the case where the parison must remain open at the bottom for ventilation purposes, for example consist of facing noses 5 having their free ends suitably rounded or flattened and which, as shown in the sequence of Figures 5 and 6, are moved together in order to grip the parison in a central zone of limited width, so as to leave the bottom end of the said parison open and free to breathe, for example with a figure-of-eight configuration. The noses 5 are made or lined with any material which is non-adhesive with respect to the material which forms the parison 2 so as not to retain parts of this material. The noses 5 are mounted on means for moving them towards and away from each other, as indicated schematically by the arrows 6 (see below) and are also associated with raising and lowering means which are denoted schematically by the arrows 7 (see below) and by means of which the said gripping means 5 closed around the bottom end of the parison are made to perform a vertical descending movement which accompanies the said parison 2 in its downward extension. The downward travel of the gripping means 5 may occur at the same speed as the natural downward movement of the bottom end of the parison, considering all the components, including the gravitational component, to which the parison is subject during the forming step, or may occur at a speed which is slightly different, i.e. lesser or greater, so as to induce in the parison a compressive or longitudinal stretching action, respectively, which cannot be obtained with the prior art and which could allow an improvement in the characteristic features of the article produced from the parison obtained with this technique.

The important advantage which arises from this solution consists in the fact that the parison 2 during production is retained both at the top by the die 1 and at the bottom by the dynamic gripping means 5 such that it is prevented from swinging, including when there are substantial air currents produced for example by the movements of the moulds 3, 103 inside the protection cabinet inside which these moulds are usually confined, so as to allow a more rapid execution of said movements, with the advantages resulting therefrom. Another advantage which is obtained from the solution described above consists in the fact that, if at least one or both the gripping means 5 are made with materials able to convey the electric charges and if they are connected to earth, as schematically indicated by the connection 8, it is possible to eliminate effectively the electrostatic charges from the parison.

From the sequence in Figures 2 and 3 it can be seen that when the gripping means 5 have reached the bottom of the moulds 3, 103 and are in a position where they do not interfere with them, the said moulds are made to close around the section of parison which is still retained at the bottom by the said gripping means 5 which, in phase sequence, are moved away from each other and if necessary are made to perform an additional movement away from the assembly 3, 103, as indicated by broken lines, so as to allow this assembly the necessary freedom of displacement towards the blowing station. This same additional travel movement may also be used to cause the gripping means 5 to co-operate with cleaning means, consisting for example of rotating brushes Z and/or other suitable means. In Figure 3, the arrows 9 denote schematically the cutting means which separate the parison section trapped between mould and counter-mould 3, 103 from the section which continues to be produced by the die 1, so as to allow the latter the necessary operational continuity and allow the transfer of the assembly 3, 103 into the blowing station. In phase synchronism with this transfer, the gripping means 5 are raised and then lowered at the speed which has been determined for them and in phase synchronism are closed so as to grip the bottom section of the parison which leaves the production die 1, so as to allow the repetition of a new working cycle. The return movement of the moulds 3, 103 into the parison gripping station may also occur at a speed higher than that of the prior art, since the parison is already held in opposite zones.

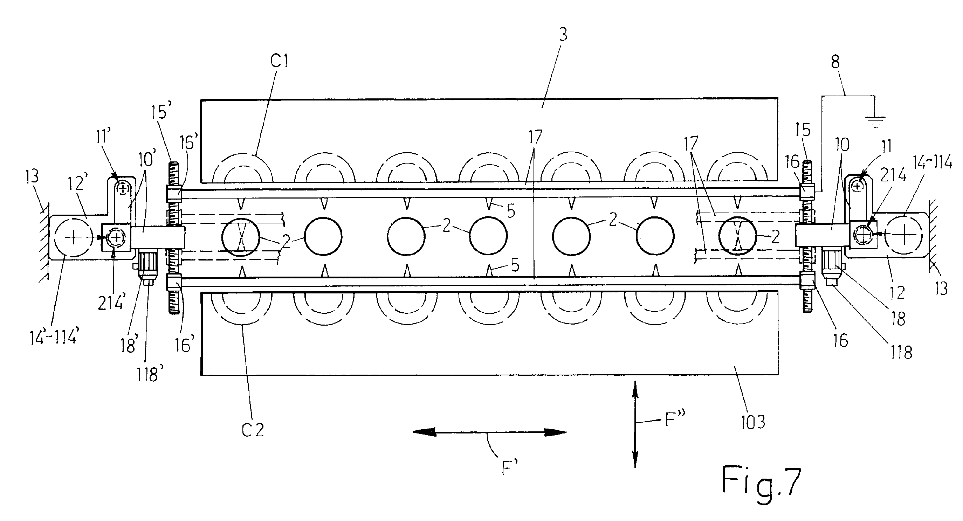

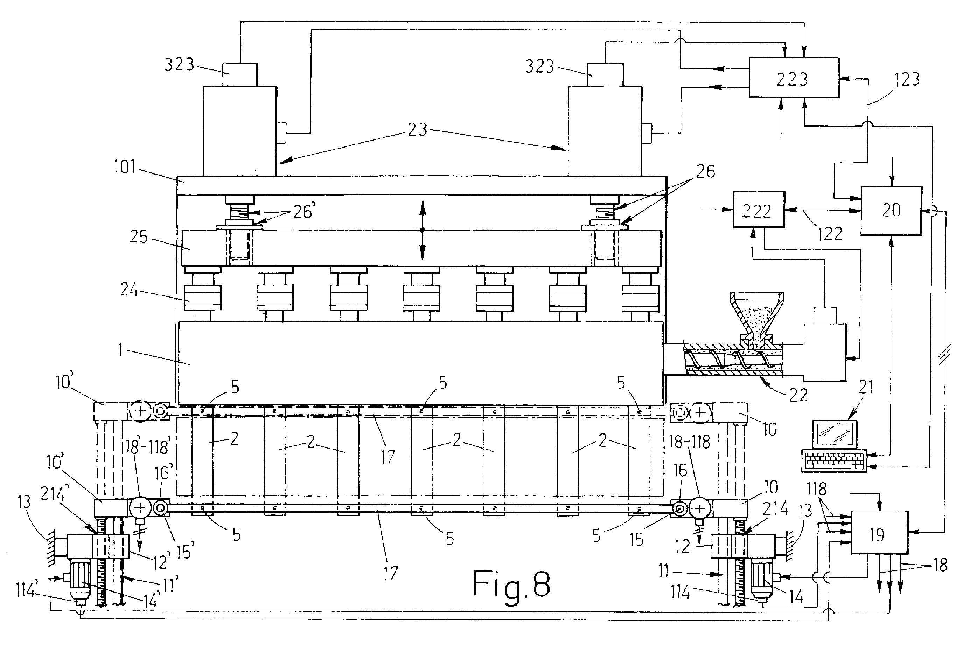

With reference to Figures 7 and 8, there now follows a description of a possible practical embodiment of a device of the type described above, for a mould and counter-mould assembly 3, 103 equipped with several opposite forming seats C1, C2 arranged alongside each other and able to enclose corresponding parisons 2 produced by a series of dies 1 arranged above. On the opposite sides of the assembly 3, 103, when the latter is in the station for gripping the parison 2, outside this assembly and in substantial alignment with the ideal plane of the mutual contact surfaces between mould and counter-mould, there are provided two identical supports 10, 10' in a mirror arrangement which, via vertical guide means 11, 11', cooperate with corresponding bottom supports 12, 12' which are fixed to a base 13 and on which vertical, linear, precision actuators 214, 214' are mounted, said actuators consisting for example of screw/nut-screw and recirculating ball systems actuated by respective motors 14, 14' which, with associated encoders 114, 114', are designed to be operated with electronic speed and phase control and with strict synchronization, by means of a so-called electric shaft connection (see below), so that the said supports 10, 10' are able to move up and down simultaneously and with perfect synchronism. The supports 10, 10' have mounted on them, rotatable with the middle part, in an arrangement perpendicular to the parisons and parallel with each other, pairs of horizontal screws 15, 15', with oppositely wound threads, with which nut screws 16, 16', for example of the recirculating ball type, co-operate in a precise manner, said nut screws being integral with the end of thin bars 17 which carry the opposite pairs of noses 5 for gripping the bottom end of the parisons 2. The pairs of screws 15, 15' are actuated by electric motors 18, 18' with associated encoders 118, 118' which allow management of these same motors with an electric shaft connection, so as to be able to actuate the bars 17 with a precise self-centring movement. If it should be required to avoid vibrations induced in the bars 17 by the screw/nut-screw assemblies, 15-16, 15'-16', the said bars or the corresponding nut screws 16, 16' may be designed to co-operate with the associated supports 10, 10' by means of corresponding horizontal guide means similar to the vertical guide means 11, 11'. It is obvious how, from the action of the motors 18, 18', the gripping means 5 obtain the necessary movement towards and away from each other in order to grip and release the parisons, while from operation of the motors 14, 14' the same gripping means 5 obtain the necessary lowering and raising movement, so as to follow the parison during the descending step and return then quickly into the high position for repetition of a new operating cycle. It is obvious from Figures 7 and 8 how, when the supports 10, 10' are in the low rest position, the entire assembly associated with the parison gripping means 5 is situated outside and underneath the mould and counter-mould assembly 3, 103, so as to avoid any interference with this assembly during transfer into the blowing station, whatever the direction of horizontal displacement F' or F" of this assembly. It is obvious that the means for guiding and relative movement of the mould 3 and counter-mould 103 will be designed so as to allow the necessary raising and lowering movements of the bars 17.

The interface 19 managing the motors 14, 14' and 18, 18' with the associated encoders is controlled by an electronic processing unit which is connected to a programming/interrogation unit 21 and which via the connections 122 and 123 is constantly informed by the electronic unit 222 of the speed of rotation of the extruder or extruders 22 for production of the parisons and by the electronic unit 223 of any variation in thickness induced in the said parisons via the special systems 23 for adjusting the axial position of the plugs of the various dies 1.

Finally from Figure 8 it can be seen that, in order to ensure maximum precision and equality in the variations in thickness of the parisons and in order to simplify and render more reliable the apparatus assigned this function, the plugs of the various dies are connected by means of respective regulators 24 to a common horizontal beam 25 which, via zones situated symmetrically and at a short distance from its ends, is connected to a pair of linear, vertical, precision actuators 23 which can be managed remotely by means of the electronic control unit 223 and consist, for example, of hydraulic systems or electric motors with electronic speed and phase control, equipped with encoders 323 so that they may be actuated in synchronism, for example using the master and sub-master or slave technique, via the same electronic unit 223 which is intended for programming and control for example via the unit 21. The actuators 23 are fixed onto a structure 101 integral with the base of the machine which supports the sets of dies 1. If the actuators 23 consist of electric motors, for example brushless motors, these motors may be designed for synchronous operation with electric shaft connection and may be connected to the beam 25 by means of screw/nut-screw precision systems 26, 26', for example of the recirculating ball type. It is understood that the beam 25 may be connected to the structure 101 situated above and/or to the structure 1 situated below, also by means of vertical precision systems of the guide and slide type.

Figure 9 illustrates application of the means for dynamic control of the parisons to mould and counter-mould assembles 3, 103 having a small number of forming seats C1, C2 situated alongside each other, for example in a machine comprising two mould/counter-mould assemblies 3-103 and 3'-103', referred to as "twin machine", as described in Italian Patent No. 1,260,295 in the name of the Applicant. The support 10 is in this case located on the side of the moulds opposite to that directed towards the blowing station into which the said moulds will be transferred after gripping of the parisons, as indicated by the arrows F, and the said support has, for example, a U shape in plan view, is connected to the fixed support 12 situated below via vertical guide means 11 which are symmetrically arranged and may be raised and lowered with precision by means of the screw and nut-screw system 214 and the electric motor 14 with electronic speed and phase control, as already mentioned with respect to the previous solution according to Figures 7 and 8. The two end branches of the support 10 carry the pairs of screws 15, 15' with oppositely wound threads which are actuated by the motors 18, 18' and with which the nut screws 16, 16' integral with the ends of the pairs of parallel and projecting bars 17, 17' co-operate, which bars carry the means 5, 5' for gripping the parisons. In this case, the bars 17, 17' are prevented from rotating about the pairs of screws 15, 15' and are kept horizontal by cooperation with guide means 27, 27' associated with the ends of the support 10. Both in the solution according to Figures 7, 8 and in the solution according to Figure 9, 8 indicates schematically the circuits for draining the static electricity from the parisons gripped by the gripping means 5, 5'.

## Claims

1. Method for reducing the cycle times and for improving the production quality of machines designed to extrude parisons and obtain subsequently from them thermoplastic articles using the blowing technique, **characterized in that**, during the step for production of the parison (2), the latter is retained, not only at the top by the production die (1) but also at the bottom end by dynamic means (5) which accompany it during the descending movement, so that the parison does not swing owing to the effect of air currents produced for example by the movement of the moulds (3) and counter-moulds (103) and/or other operative parts of the machine which are thus able to move more rapidly than occurs in the prior art, with the advantages resulting from reduction of the idle time in the machines in question.

2. Method according to Claim 1, in which the bottom end of the parisons is retained until the corresponding upper section of the formed parison is enclosed between the mould (3) and the counter-mould (103) for extrusion blow-moulding.

3. Apparatus for reducing the cycle times and improving the production quality of machines designed to extrude parisons and subsequently obtain from them thermoplastic articles using the blowing technique, in particular for implementing the method according to the preceding claims, **characterized in that** in phase synchronism with the process for extrusion of the parisons by the associated dies (1), the bottom end of the said parisons is retained by gripping means (5) which descend at a predefined speed so as to accompany the said parisons during their travel movement downwards, such that during the formation step the parisons are supported at both the opposite ends and are not free to swing in the empty space, as occurs by contrast in the prior art.

4. Apparatus according to Claim 3, in which the means (5) which retain the bottom end of the parisons and which accompany them downwards during the formation step move with a vertical movement parallel to the axis of the said parisons (2).

5. Apparatus according to Claim 4, in which the means (5) which retain the bottom end of the parisons (2) and which accompany them downwards during the formation step move at the same speed at which the ends of the said parisons would descend also as a result of the force of gravity.

6. Apparatus according to Claim 4, in which the means (5) which retain the bottom end of the parisons (2) and which accompany them downwards during the formation step move at a speed slightly greater than or less than the speed at which the said bottom ends of the parisons would descend also owing to the force of gravity, so as to induce in the parisons a stretching action or longitudinal compression, respectively, and therefore modifications in the thickness which could improve the quality of the products which must be obtained from them.

7. Apparatus according to Claim 3, in which the said dynamic means (5) for gripping and accompanying the bottom end of the parisons during the formation step are made entirely or partly of electrically conductive material and are provided with an earth connection (8) for discharging the static electricity from the said parisons.

8. Apparatus according to any one or more of the preceding claims, in which the said means (5) for gripping the bottom end of the parisons consist of facing gripping means actuated with a self-centring movement.

9. Apparatus according to Claim 8, in which the said means (5) for gripping the bottom end of the parisons have a pointed shape with the free end suitably rounded and/or flattened so as to touch the parisons substantially in opposite zones with a limited contact surface area and in such a way as to leave the said bottom end of the parison substantially open so that the latter is able to breathe freely.

10. Apparatus according to Claim 9, in which the means (5) for gripping the bottom end of the parisons are made or lined with any suitable material which is non-adhesive with respect to the material which forms the parisons so as not to retain parts of this said material.

11. Apparatus according to Claim 9, in which the means (5) for gripping the bottom end of the parisons are designed to intercept the intermediate or middle part of this bottom end of the parisons so that the latter assumes a substantially figure-of-eight shape in plan view.

12. Apparatus according to the preceding claims, in which the means (5) for gripping the bottom end of the parisons are mounted on horizontal bars (17) which, with at least one end situated outside the projection of the mould and the counter-mould (3, 103), are associated with self-centring horizontal displacement means for the steps of closing and opening the said gripping means and are associated with vertical displacement means so as to follow the parison during the extrusion step and so as to then move back upwards with the correct acceleration into the high position for repetition of a new working cycle.

13. Apparatus according to Claim 12, in which the means for self-centring displacement of the horizontal bars (17) which carry the facing means (5) for gripping the parisons are mounted on at least one support (10) which is connected to bottom vertical raising and lowering means, all of which so that, when the said bars are in the lowered end-of-travel position, the entire apparatus is located underneath the mould and counter-mould assembly (3, 103) so that the latter is able to move towards the blowing station, with a movement in the same direction as (F") or perpendicular (F') to the closing movement of the said mould and counter-mould assembly, without the danger of interference with the said apparatus.

14. Apparatus according to Claim 13, in which the means for self-centring displacement of the horizontal bars (17) which carry the facing means (5) for gripping the parisons comprise nut screws (16) which are integral perpendicularly with the said bars and which cooperate with pairs of screws with oppositely wound threads (15) supported rotatably by the said support (10) and actuated by an electric motor (18) with encoders (118) for electronic speed and phase control.

15. Apparatus according to Claim 13, in which the means for vertical displacement of the support (10) having the means for self-centring displacement of the horizontal bars (17) with the facing means (5) for gripping the parisons comprise vertical guide means (11) associated with a bottom fixed support (12) on which are mounted the vertical displacement actuators (214) consisting for example of screw and nut-screw assemblies actuated by electric motors (14) with encoders (114) for electronic speed and phase control.

16. Apparatus according to the preceding claims, in which the electric motors (18, 14) with encoders (118, 114) for the closing/opening and raising/lowering movement of the rods with the parison gripping means (5, 5') are operated by an interface system (19) managed by an electronic processing unit (20) which is connected to a programming and control unit (21) and which, by means of associated electronic units (222, 223), receives continuous information relating to the speed of rotation of the extruders (22) which supply the plastic material to the parison forming dies (1), and by the means (23) which modify the axial position of the plugs of the said dies, so as to vary the thickness of the said parisons.

17. Apparatus according to Claim 13, **characterized in that**, if the moulds and counter-moulds (3, 103) have a small number of opposite forming seats (C1, C2) situated alongside each other, the bars (17) which carry the parison gripping means (5) are supported in a projecting manner at a single end by the respective nut-screws (16) and are connected to guide means (27) parallel to the pairs of actuating screws (15) with oppositely wound threads.

18. Apparatus according to Claim 13, **characterized in that**, if the moulds and the counter-moulds (3, 103) have a large number of opposite forming seats (C1, C2) situated alongside each other, the bars (17) which carry the parison gripping means (5) are connected at both their ends to associated horizontal and vertical displacement systems and the electric motors (14, 14', 18, 18') of these systems are synchronised with an electric shaft connection.

19. Apparatus for improving the production quality of machines designed to extrude parisons and subsequently obtain from them thermoplastic articles using the blowing technique, with moulds and counter-moulds (3, 103) having a large number of opposite forming seats (C1, C2) situated alongside each other, **characterized in that**, in order to ensure the maximum precision and equality in the variations in thickness of the parisons and in order to simplify and render more reliable the apparatus performing this function, the plugs of the various dies (1) are connected by means of respective regulators (24) to a common horizontal beam (25) which, via zones arranged symmetrically and at a short distance from its ends, is connected to a pair of linear precision actuators (23) which are fixed onto a structure (101) integral with the base of the machine which supports the set of dies (1) and consist for example of hydraulic systems or electric motors with electronic speed and phase control and are equipped with encoders (323) so as to be able to be operated in perfect synchronism, for example using the master and sub-master or slave technique, by means of an electronic control unit (223) able to perform programming and interrogation by means of a special unit (21), it being envisaged that, if the actuators (23) consist of electric motors, they may be synchronised with an electric shaft connection and may be connected to the said beam (25) by means of screw/nut-screw precision systems (26, 26'), for example of the recirculating ball type.

20. Apparatus according to Claim 19, in which the beam (25) to which the plugs of the set of dies (1) are connected may be connected to the fixed structure (101) situated above and/or to that (1) situated below by means of vertical precision systems of the guide and slide type.

21. Apparatus according to the preceding claims, **characterized in that** the means for guiding and moving the moulds and counter-moulds (3, 103) are designed in any manner so as to avoid interference with the bars (17) which carry the parison gripping means (5).

22. Apparatus according to any one or more of the preceding claims, **characterized in that** means (Z) of any suitable type may be envisaged for cleaning the parison gripping means (5) after each active working stroke thereof.
